# EUROPEAN PATENT APPLICATION

(11) **EP 4 195 496 A1**
(43) Date of publication of application: **14.06.2023**
(21) Application number: 22174727.2
(22) Date of filing: 23.05.2022
(51) Int. Cl.: H02P 27/08, H02P 29/024, H02P 29/028, H02P 29/032, G05B 19/406, B65G 43/00, G05B 19/418

(54) **METHOD FOR OPERATING A MOTOR-ROLLER CONTROLLER, MOTOR-ROLLER CONTROLLER AND CONVEYOR SYSTEM**

(71) Applicant: Kyowa Europe GmbH, 42799 Leichlingen (DE); Industrial Software, 1618 Sofia (BG)
(72) Inventor: Petrov, Dimitar Ivanov, 1225 Sofia (BG); Yankov, Nikola Aleksandrov, 1142 Sofia (BG); Suvandzhiev, Dimitar Hristov, 1750 / 1784 Sofia (BG); Petrov, Ivan Dimitrov, 1225 Sofia (BG); Ichieda, Kazuya, Miki city, Hyogo Prefecture, 673-0424 (JP); Malina, Georg, 40237 Düsseldorf (DE)
(74) Representative: Cohausz & Florack

(57) **Abstract**

Method for operating a motor-roller controller wherein a voltage value indicative of a voltage at an input power port of the motor-roller controller is determined by the motor-roller controller and a first threshold value for the voltage value is set in the motor-roller controller. Then a nominal value for the output power at a motor-roller control port of the motor-roller controller is set depending on at least the voltage value and the first threshold value

## Description

The subject matter relates to a method for operating a motor roller controller, in particular for a conveyor system, for instance for conveying goods, packages and the like. Moreover, the subject matter relates to a motor-roller controller and a conveyor system.

Motor-driven conveyor-rollers, a.k.a. motor-rollers, comprise a roller body rotatable mounted about a roller axis. The roller body usually is a hollow tube. Within the roller body, the motor is arranged. The motor is an electric motor which is configured to generate a rotational movement about the roller axis between the axis and the roller body.

For the sake of understanding, in the following the term motor-roller can be used for the motor within the roller body alone, a drive unit comprising the motor and a corresponding control circuit for the motor within the roller body or the roller body comprising the motor or the drive unit. In the following the term motor can be used for the motor as such as well as the drive unit comprising the motor as such and a corresponding control circuit for the motor.

It is well known that motor-rollers are operated by a control unit, also known as controller, being arranged external, outside the roller body. The controller exchanges control signals with the motor inside the roller body.

Motor-driven conveyors driven by motor-rollers of this type are used in conveyor systems. In such conveyor systems, a single motor-roller is used to operate several roller bodies within a conveyor zone. Conveyor systems oftentimes have several conveyor zones through which an object to be conveyed passes one after the other. As has been said, within each conveyor zone, at least one motor-driven conveyor-roller operates several rollers.

A controller has a wired power inlet (input power port) for receiving electric power, preferably DC power. However, the input power port may also be an AC port, in this case, on the controller there may be arranged a rectifier for converting the input AC power to DC power. Moreover, the controller has a wired motor-roller control port. The wired motor-roller control port is configured to provide the motor-roller with drive power. The motor can be fed through the motor-roller control port using for instance a pulse width modulation (PWM) signal to control at least the rotational speed of the motor. In addition, status information and control signals can be exchanged between the motor-roller and the controller using the motor-roller control port. Status information and/or control signals can, inter alia, include actual motor speed, nominal (setpoint) motor speed, actual conveyor speed, nominal (setpoint) conveyor speed, actual rotational direction, nominal (setpoint) rotational direction, actual operation mode, nominal (setpoint) operation mode, temperature, error messages, gear ratio of the motor gear, serial number, article number, production date and or the like. In particular, the motor-roller control port is a four wired motor-roller control port in line with EP 3 100 340 B1.

A conventional controller comprises a wired I/O (Input/Output)-port. This I/O-port is configured to exchange control information with a central control center for instance a central PLC (SPS)-control. The I/O-port can, for instance, be configured using a proprietary protocol. However, the I/O-port can also be configured using standardized I/O-protocols, for instance according to CAN, DeviceNet, Ethernet Powerlink, INTERBUS, Fieldbus, LIN, M-Bus, PROFIBUS, VARAN and the like. In addition to such a conventional controller, a wireless controller is know, which operates similar to the wired controller. The explanation for the wired and the wireless controllers can be used for both, with the exception that the I/O Bus is a wireless bus, with appropriate wireless protocols.

The controller is configured to exchange motor-roller control signals with a motor-roller at the motor-roller control port, to exchange motor-roller status signals with the motor-roller at the motor-roller control port and to exchange motor-roller control signals for the motor-roller with a central control at the I/O-port. Exchange of the relevant control and status signals are well known and need no further description. It should be noted that all of the ports an inlets of the wired controller are preferably wired ports, requiring wiring between the motor-roller and the controller and the controller and centralized control center. Wiring usually is necessary to provide stable communication in industrial environments. A wireless controller has also a wiring with the motor-roller and the power inlet, however, a wireless I/O port.

For the sake of understanding, the motor-roller controller, a.k.a. controller, may be arranged for controlling motor-rollers. As such, within the controller, at least one microprocessor may be provided for operating the motor-roller within a conveyor system and more particular for operating at least one motor-roller within a conveyor system.

Conveyor systems usually are constructed with several conveyor zones. That is, one conveyor zone is followed by the next conveyor zone. Within each conveyor zone at least one, preferably only one motor-roller is provided. At least two spatially neighboring motor-rollers may also be operated by a single motor-roller controller.

Preferably, every motor-roller or at least every second is controlled by a separate motor-roller controller. The motor-roller controllers are connected to each other and with a central controller using preferably a serial bus.

The controllers of a conveyor system are powered by a central power supply. The power supply is preferably DC, however, the subject matter also relates to AC power supplies, where possible. In a typical conveyor system, in particular where human interaction is involved, the power supply has low voltage. Low voltage in this sense can be understood as being voltages below 100V, in particular below 30V, for instance 24V or 12V. In order to provide sufficient power for the motors, higher supply currents are then required. These high currents require, in order to keep ohmic losses in the supply cables low, cross-sections of the supply cables to be greater than, for instance 1,5mm², in particular greater than 2,5mm² or 4mm². These higher cross-sections require more metal per meter cable, increasing the cost of the cable. In order to keep cost low, the cabling is calculated with the minimum requirement. However, the ohmic losses result in voltage drops along the supply line, i.e. from the power supply to the controller. In a situation with a high power demand this can result in under voltages at a controller and thus at the motor connected to this controller. The under voltage may cause the controller and/or the motor to malfunction. The under voltage issue is solved usually according to prior art by issuing an error signal from the controller or by a momentary stop of the controlled motor. Both of these solutions cause negative side effects on the overall system. Looked at the system integration perspective the issue is annoying and irritating.

Moreover, conveyor systems usually are equipped with power supplies having current ratings that satisfy the most reasonable cases of operation. However, there are cases with higher current requirements, i.e. when the goods to be transported are heavier than expected during design of the conveyor system, which result in overcurrents and thus activation of a power supply protection. This will also lead to malfunctions in the conveyor system.

The above definitions and descriptions can be understood to be part of the following disclosure, i.e. they form integral part of the subject-matter as claimed.

In order to improve system availability and to overcome the problem with under voltages and/or overcurrents, the subject matter relates to a method of claim 1.

A conveyor system is in particular arranged for conveying goods, packages and the like along a conveying line. A conveying system may be comprised of at least two conveying zones, each of which is actuated using one motor-roller. For the sake of understanding, the terms conveyor, conveyor zone or conveyor line can be understood as synonyms. A conveyor system may be comprised of at least two conveyor zones. A conveying zone may be comprised of at least one motor-roller and at least two, preferably six or more passive rollers. A motor-roller and a passive roller are each comprised of a preferably cylindrical tube being rotatable connected to a rack via an axis. By actuating the motor-roller, the passive rollers are also actuated and rotated in a desired direction.

In order to operate a motor-roller, a motor-roller controller is required. The motor-roller controller is arranged for empowering the motor-roller with electrical power and moreover for controlling the action of the motor-roller, in particular for controlling start/stop, direction, torque, number of revolutions, number of revolutions per minute (RPM). Moreover, the motor-roller controller can be arranged for sensing motor-roller status. Empowering the motor-roller and/or sensing a motor-roller status may be accomplished using the motor-roller control port of the motor-roller controller. The motor-roller is wired to the motor-roller controller along the motor-roller control port. Thus, the motor-roller control port of the motor-roller controller is a wired port. In order to operate a plurality of motor-roller controllers, the motor-roller controllers are in turn connected to a control bus via the I/O port. Conventional systems are comprised of a plurality of motor-roller controllers each of which being connected to a wired control bus.

Now, there is proposed a method for operating a motor-roller controller.

When operating the motor, the controller draws current from the input power port, e.g. a power inlet as described above. The current is provided from the power supply to the input power port through a cabling. The cabling can connect two or more controllers to a common power supply. The cabling has at least two wires. Depending on the required power of the motor roller, the current in the cabling rises and with that also the ohmic losses. The ohmic losses lead to a reduction of the input voltage at the input power port compared to the output voltage at the power supply. This is in particular the case in systems with manual interaction, which require low voltages, in particular below 100V, for instance 48, 30 or 24V systems, which then in turn required higher currents.

At the input power port, a voltage value indicative of a voltage at the input power port of the motor-roller controller is determined. It is preferred that determining is carried out by a meter, e.g. a voltmeter. The meter is arranged for sensing information indicative of the voltage at the input power port. The meter may put out the voltage value being indicative of the sensed voltage.

Indicative may also be understood as representative. The term meter can be understood as measurement sensor. Determining may be understood here and in the following as obtaining, measuring, sensing, calculating, computing, tapping, metering or the like. The terms obtaining, measuring, sensing, tapping, metering or the like can be used as synonyms. Determining may be carried out by units within or on the motor roller controller or by units outside the motor roller controller.

Not only one voltage value may be determined, but it is preferred that a plurality of voltage values at different instances in time, e.g. on a regular or irregular basis, triggered by an event or continuously are determined. Thus, the voltage value may also be understood as a function over time, i.e. the voltage variation over time. The function over time can be understood as a curve or a slope.

Besides the voltage value, a first threshold value is set in the controller. The threshold value can be a value indicative of a voltage at the input power port, at which it is expected that the ohmic losses are too high. The first threshold value may be manually parameterized in the controller at system installation or during maintenance. The first threshold value may be dynamically parameterized during operation of the controller, for instance depending on status data of the conveyor system. For instance, the first threshold value may, for 24V systems, 21V. That is, it is expected that between the maximum voltage of the system, e.g. 24V and the first threshold value, e.g. 21V, the operation of the motor is considered to be flawless. For other systems, with other voltage, different values are possible, e.g. 30V maximum voltage, 25V first threshold value, 48V maximum voltage, 30V first threshold value, etc. These values are considered to be only illustrative.

In order to allow the conveyor system to operate flawless in most conditions, in particular in conditions when high power is required at the motor roller, it is now proposed that a nominal value for the output power at a motor-roller control port of the motor-roller controller is set depending on at least the voltage value and the first threshold value. The term nominal can also be understood as setpoint. The nominal value can be an absolute value of the output power, a relative value of the output power, an absolute value of a reduction of the output power, a relative value a reduction of the output power or the like. The nominal value may also be understood as a function over time, i.e. the nominal value may vary over time. The function over time can be understood as a curve or a slope. The nominal value may be determined based on factors. The nominal value may be determined based on a function with the values described herein, as arguments. These arguments may be used in a linear or non-linear fashion, with their derivative over time, with their integral over time, with discrete values at certain instances in time or the like.

A motor usually requires a minimum voltage to operate flawless. The nominal value may impose a reduction of the current power drawn by the motor and in turn a stabilization of the voltage to be provided to the motor. The term current, where applicable, may be either be understood as instant / actual, i.e. at a certain instance in time, or as amperage.

By reducing the power drawn by the motor, the ohmic losses on the cabling from the power supply to the controller may be reduced, thus safeguarding a sufficient voltage at the input power port and in turn at the motor control port. Thus, the motor can be driven with sufficient voltage in most cases and stopping the motor and thus the conveyor system may be prevented.

The power drawn by the motor can be controlled using Pulse Width Modulation. The nominal value may also be indicative of a duty cycle of the PWM Signal provided to the motor. PWM can thus be used to control the amount of power delivered to the motor without incurring the losses that would result from linear power delivery by resistive means. The PWM signal can preferably a rectangular PWM. The duty cycle can be set by the nominal value, for instance between 70% and 30%.

According to an embodiment, it is proposed that a second threshold value for the voltage value is set in the motor-roller controller and the nominal value is set further depending on the second threshold value. The second threshold value can be understood as a limit value. The second threshold value can be indicative of a voltage at the motor-roller controller port which is required at the minimum. That is, the motor can operate at least sufficiently stable while the voltage at its input is above the second threshold value. For instance, the second threshold value may, for 24V systems, 18V. That is, it is expected that between the first threshold value, e.g. 21V and the second threshold value, e.g. 18V, the operation of the motor is considered to be flawless. For other systems, with other voltage, different values are possible, e.g. 30V maximum voltage, 18V second threshold value, 48V maximum voltage, 20V second threshold value, etc. These values are considered to be only illustrative.

The reduction of the power drawn by the motor can be such that it takes place while the voltage value is in between the first threshold value and the second threshold value. Once the voltage value drops below the first threshold value, the reduction of the power drawn by the motor may start by determining a nominal value and applying the nominal value on the current power. While the voltage value stays within the first and second threshold values, the nominal value is set. Moreover, once the voltage drops to or below the second threshold value, the nominal value can impose zero or near zero power for the output power. That is, at or below the second threshold value, no further power is drawn by the motor. The motor is stopped. This means that the second threshold value may safeguard sufficient operation of other motors since the motor where the second threshold value is reached is stopped, thus no further current is drawn and the ohmic losses due to this motor in the cabling are reduced to zero.

It may also be possible that at or below the second threshold value the power reduction and thus also the nominal value may remain where it was prior to the voltage value reaching the second threshold value, i.e. that the second threshold value determines a limit for the power reduction. This means that the second threshold value may safeguard sufficient operation of the motor at the maximum possible reduction at that time.

According to an embodiment, it is proposed that a power value indicative of a current output power at the motor-roller control port is determined by the motor-roller controller and the nominal value is set further depending on the power value. During operation, the motor draws power from the motor port. This power may change over time. The reduction of the power may depend on the instant (current) power drawn. For instance, if the power is already low, the reduction may be, in absolute terms, also low, and if the power is high, the reduction may be, in absolute terms, also high. The determination of the nominal value may thus not only depend on the voltage value and the threshold values, but in addition on the current power at the motor. For instance, the power value may be indicative of the current duty cycle of the PWM signal for the motor. The nominal value may be indicative of a different duty cycle of the PWM signal for the motor. For instance, to reduce the power of the motor, the duty cycle indicated by the nominal value may be lower than the duty cycle indicated by the power value.

Not only one power value may be determined, but it is preferred that a plurality of power values at different instances in time, e.g. on a regular or irregular basis, triggered by an event or continuously are determined. Thus, the power value may also be understood as a function over time, i.e. the power variation over time. The function over time can be understood as a curve or a slope.

According to an embodiment, it is proposed that the nominal value is such that the current output power is reduced. The nominal value may be an absolute value of power. In this case, the nominal value may be the setpoint value for the current output power. The nominal value may also be an absolute value of a reduction of power. In this case, the nominal value may be subtracted from the current output power to obtain the setpoint output power. The nominal value may also be a relative value of the current power. For instance, the nominal value may be 10% of the current output power. In this case, the nominal value may impose a 10% reduction of the current output power. The value 10% is used only for illustrative purposes. The nominal value may determine a duty cycle of the PWM signal for the motor, where a lower duty cycles represents a lower power consumption of the motor.

According to an embodiment, it is proposed that a difference value between the voltage value and the first threshold value is calculated and that the nominal value is set further depending on the difference value. For instance, the reduction depends on the difference between the first threshold value and the voltage value. For instance, the lesser the difference between the first threshold value and the voltage value, the higher the nominal value, e.g. the higher the reduction. Once the voltage value drops below the first threshold value, the difference between the first threshold value and the voltage value increases with reduced voltage values. The absolute difference value may be used to determine the nominal value. For instance, the nominal value may have a proportional or anti-proportional relation with the difference value.

Not only one difference value may be determined, but it is preferred that a plurality of difference values at different instances in time, e.g. on a regular or irregular basis, triggered by an event or continuously are determined. Thus, the difference value may also be understood as a function over time, i.e. the difference variation over time. The function over time can be understood as a curve or a slope.

According to an embodiment, it is proposed that an impedance value indicative of at least an ohmic resistance of the cables connecting the motor-roller controller to a power supply is determined and the nominal value is set further depending on the impedance value. Determining the impedance value may include measuring the ohmic resistance of the cabling between the controller and the power supply. A high impedance may result in a steeper current drop with rising power demand. As such, the impedance value may be used to determine the nominal value.

Not only one impedance value may be determined, but it is preferred that a plurality of impedance values at different instances in time, e.g. on a regular or irregular basis, triggered by an event or continuously are determined. Thus, the impedance value may also be understood as a function over time, i.e. the impedance variation over time. The function over time can be understood as a curve or a slope.

According to an embodiment, it is proposed that a maximum difference value is calculated from a difference between the first threshold value and the second threshold value and the nominal value is set further depending on the maximum difference value. The higher the maximum value, the bigger is the distance between the two threshold values. In that case, the motor can operate in a bigger voltage range sufficiently safe. The change rate of the nominal value may depend on the maximum difference. The larger the maximum difference value, the higher the change rate may be or the larger the maximum difference value, the lower the change rate.

According to an embodiment, it is proposed that setting the nominal value comprises to start reducing the current output power when the voltage value drops below the first threshold value. For instance, the duty cycle of a PWM signal for the motor can be reduced. Dropping below a value may also comprise reaching the value. As has been said, while the voltage is sufficiently high, i.e. above the first threshold value, the motor operates without flaws. Once the first threshold value is reached, it may be necessary to reduce the power drawn to ensure that an increase in the overcurrent is mitigated to reduce the reduction of the undervoltage. By reducing the power of the motor, the current drawn by the motor can be reduced. This will lead to a reduction in the amperage and thus reducing the ohmic losses.

According to an embodiment, it is proposed that setting the nominal value comprises to stop the power output when the voltage drops below the second threshold value and/or the difference between the first threshold value and the voltage value is equal or greater than the maximum difference value. In such a case, the voltage does not allow any further sufficient operation of the motor. This motor can be stopped, which leads to less current on the cabling any might then increase the voltage at other motors. For instance, the duty cycle of the PWM signal for the motor can be set to 0%.

According to an embodiment, it is proposed that a time value indicative of a duration of reducing the current power is determined and that the nominal value is set further depending on the time value. For instance, the longer the nominal value is set, the more it may increase. For instance, the nominal value may increase proportional to the time value.

Not only one time value may be determined, but it is preferred that a plurality of time values at different instances in time, e.g. on a regular or irregular basis, triggered by an event or continuously are determined.

According to an embodiment, it is proposed that setting the nominal value comprises reducing the current output power with a dependency on at least the voltage value, the difference value and optionally at least one of the power value, the difference value, the maximum difference value, the time value and/or the impedance value. The dependency may comprise a linear or non-linear dependency. The dependency may comprise gradient of the slope of at least one of the values and/or an integral over the slope of least one of the values. The dependency may be an equation with the values as arguments.

According to an embodiment, it is proposed that setting the nominal value comprises reducing the current output power in dependency of at least one of the values. The dependency may be proportional and/or anti-proportional per at least one to the values.

The dependency between the nominal value and each or any one of the values may be individual for each of the values. That means that there may be different dependencies between one of the values and the nominal value. The different dependencies may be imposed in one calculation step. The equation for determining the nominal value may have proportional, antiproportional, linear and/or non-linear dependencies from the values explained above.

According to an embodiment, it is proposed that the nominal value remains below the current output power determined at the time when the voltage value dropped below the first threshold value until setting the nominal value is stopped. It can be safeguarded that the nominal value is such that as long as the voltage value is below the first threshold value, the output power is less than it was when the limiting started. By that it can be ensured that while the voltage is below the first threshold value, the output power is always less than at the time prior to the voltage value dropping below the first threshold value.

According to an embodiment, it is proposed that the nominal value and/or the current output power are communicated to an external device. In order to supervise the control, the nominal value and/or the current output power may be communicated to a central controller. By that, the information about the operation of each motor may be known in the central controller. It may be determined which motor is operated with a reduced power and also the amount of reduction can be known. Communication may comprise sending, receiving, transmitting, polling, pushing and the like of information.

Another aspect is a motor-roller controller configured to operate according to the above described method.

A further aspect is a conveyor system, for instance for conveying goods, packages and the like comprising at least two motor-roller controllers according to the above and/or operating according to the above described method.

The nominal value may be determined for each controller along a conveyor line individually. The nominal value may be determined for more than one controller of a plurality of controllers along a conveyor line commonly. The nominal value can be understood as a setpoint or as an indication for the output power of the controller at the motor-roller control port. The nominal value can be understood as a setpoint or as an indication for the power of the motor within the motor-roller.

For instance, for a certain time or time interval, in particular for the instant time, the controller may take into account the instant determined voltage value and threshold value, and in particular any other of the above mentioned values.

After the nominal value for the controller has been determined, the motor-roller control port of the motor-roller controller is operated with an output power being determined by the actual output power and the nominal value. It may also be possible that the output power being determined by the power required by the motor and the nominal value. The motor may request, via the motor roller controller port, a certain power. The motor is controlled in such a way that it draws power from the motor-roller control port depending on the nominal value. The power drawn at the motor-roller control port may be different than the nominal value, still, however, the change of power from the instant (current) output power is towards or reduced by the nominal value.

According to an embodiment, the nominal value is determined by a processor of at least one motor-roller controller within a common group. According to embodiments, the processor may further compute the further values mentioned above. The processor may also determine the nominal value. Within the processor, the threshold values may be parameterized. The processor may be arranged to compute according to a method described.

According to an embodiment, a slope for changing the value of the output power to the motor-roller in the direction of the nominal value (or the power reduced by the nominal value) is determined depending on the values determined above. The slope may depend on the absolute value and/or a gradient of the slope of at least one of the values and/or an integral over the slope of least one of the values

According to an embodiment, a power slope for changing the value of the output power to the motor-roller in the direction of the nominal value (or reduced by the nominal value) is determined by a P, PD, PI or PID controller using as arguments at least the voltage value and the first threshold values, and possible at least one further of the values determined above.

The change of nominal value may be linear or non-linear. Depending on the application of a certain motor roller controller within the conveying line, the change of nominal value may follow a linear slope or non-linear slope.

As has been said, some controllers are more relevant for the functioning than others. It may be suitable to exclude one or more controllers at all from power control as explained, using the nominal values. Therefore, it is proposed that at least one motor-roller controller is configured not to limit its power using the nominal value.

These and other aspects of the subject matter will be explained more detail with reference to the following figure. In the figure show:
- Fig. 1: a motor-roller-controller according to embodiments;
- Fig. 2: a conventional conveyor according to an embodiment;
- Fig. 3: a conveyor system comprising a plurality of controllers according to an embodiment;
- Fig. 4: a flowchart showing steps of the method according to an embodiment.

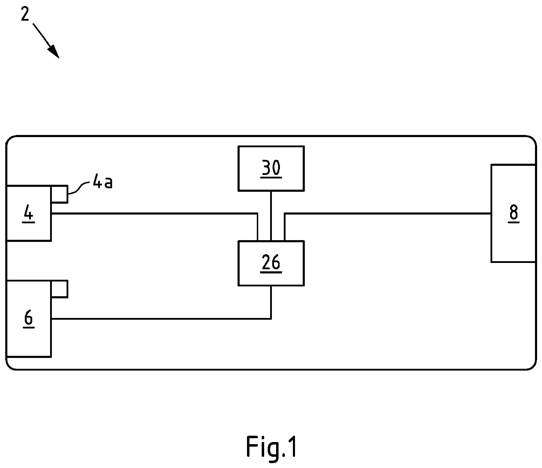

Fig. 1 shows a conventional wired motor-roller controller 2 for motor-rollers. The controller 2 has a power inlet 4. The power inlet 4 (input power port) is a DC-power inlet 4, in particular 12V or 24V power inlet, may however also be an AC inlet. Power inlet 4 receives the electric power for operating the controller 2. The power inlet 4 may also receive the electric power for operating a motor-roller.

A motor-roller can be connected to a motor-roller control port 6. Motor-roller control port 6 has at least two, preferably four connectors for connecting the motor-roller. Via the motor-roller control port 6 the motor-roller may at least be supplied with electrical energy. In addition, the motor-roller may be controlled by exchanging control signals and/or status information signals via the motor-roller control port 6. Control of motor-rollers as such is well known and will not be described in more detail.

Finally, controller 2 has an I/O-port 8. I/O-port 8 can be a communication port for wired and/or wireless communication, for instance according to an industry standard, in particular as mentioned above. Moreover, I/O-port 8 can support any proprietary protocol. Via port 8, control signals and/or status information can be exchanged between the controller 2 and a central control center.

The controller 2 further has a central processor 26 which is connected to the power inlet 4, the motor-roller control port 6 and the I/O-port 8. The central processor 26 can be programmed. The programming may be understood as setting parameters for the motor-roller. According to the programming, the motor-roller is instructed via motor-roller control port 6 to at least rotate in a certain direction at a certain speed. Any other parameters as described above can be parameterized and programmed. The processor 26 can be programmed to operate according to any of the methods disclosed herein.

It is possible to set the parameters of controller 2 and read out status information from controller 2 via port 8. In addition, controller 2 may have a memory 30.

During operation, central processor 26 outputs control signals for a motor-roller via motor-roller control port 6. The signals output, the amperage as well as the voltage of the output signals and the like depend on settings (parameters) of controller 2, which are controlled according to the methods described herein. In particular, processor 26 may be programmed to obtain the first and second threshold values. These maybe parameterized manually or using the I/O port. Moreover, during operation, central processor 26 reads out status information from the motor-roller via motor-roller control port 6. Processor 26 may be programmed to determine the nominal value as described above and the set the output power at the motor-roller control port 6 using the nominal value, as described above.

A voltage sensor (meter) 4a may be arranged at the power input port 4. The voltage value can be measured by sensor 4a.

The processor 26 may obtain information from the motor indicative of a required power. This may be an absolute power value, a value indicative of torque and/or rotational speed. Based on this information about the required power, the processor 26 operates the controller such that a current (instant) power is provided to the motor. This power may change over time. However, due to power demands, overcurrents may occur in the cabling, which in turn result in ohmic losses, which cause undervoltages at the input power port 4. In order to prevent these undervoltages, the present method is applied in the processor 26.

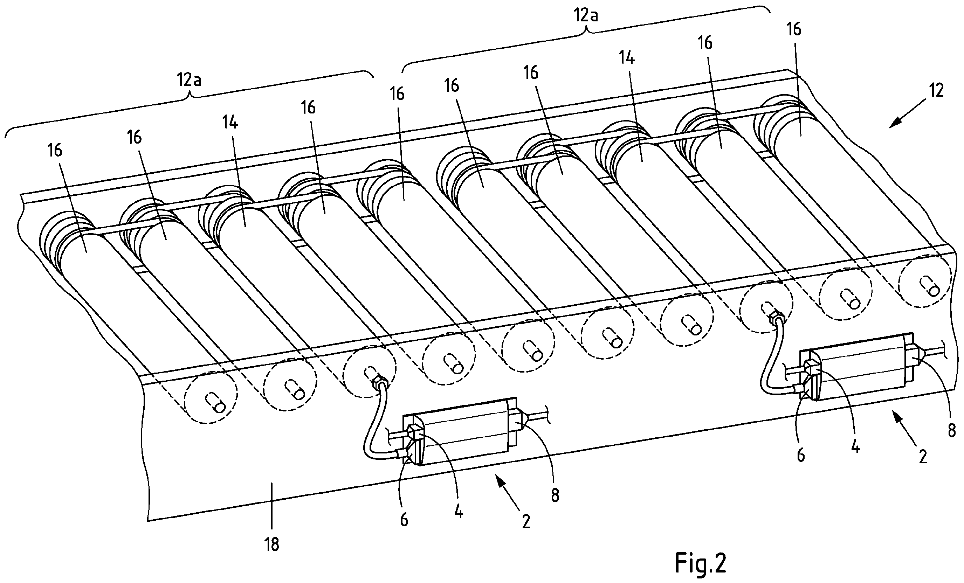

A conventional conveyor as illustrated in Fig. 2 may comprise motor-rollers 14 and rollers 16. A conveyor line 12 may have two or more conveyor zones 12a. Within each conveyor zone 12a, one motor-roller 14 is mechanically coupled with at least one, preferably between two to seven rollers 16, in particular by V-belts or poly-V-belts or the like. Other mechanical couplings are also possible.

A motor-roller 14 is rotatable arranged on a rack 18 and comprises a motor within a hollow tube. The motor within the hollow tube is connected to the controller 2 via its motor-roller control port 6.

For each of these zones 12a, a separate controller 2 is provided controlling the respective motor-roller 14. The controllers 2 are connected to power and a control bus via their power inlets 4 and I/O-ports 8.

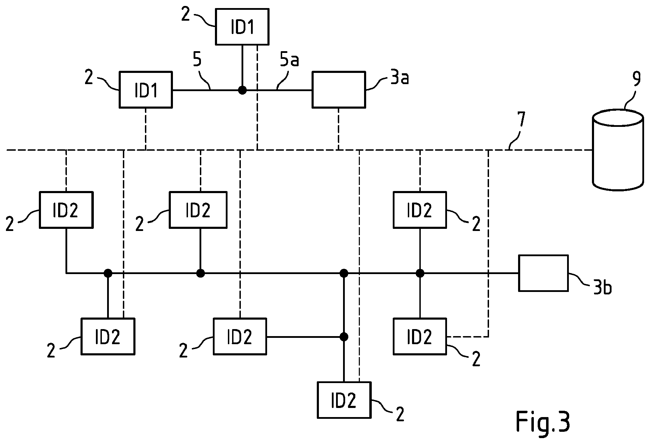

Fig. 3 depicts a conveyor system with a plurality of controllers 2. Each controller is connected to a power bus via a cable 5. Each power bus is powered by a power supply 3a, b. Undervoltages may occur due to ohmic losses along the cables 5 due to overcurrents. Also, the rated power of power supply 3 may be less than the power drawn by all controllers 2 connected via the same power bus to the power supply 3a, b. In order to avoid overcurrents and undervoltages, the present application proposes to reduce the power drawn be the motor using a nominal value. The nominal value may be an absolute or relative value of reduction, a reduction factor, an absolute value of power or the like. By means of the nominal value, the instant power of the motor may be reduced to a lower value, thus reducing the current drawn by the motor and thus the ohmic losses along the supply cables.

As can be seen, controllers 2 are in communication connection via a communication bus 7. Communication bus 7 can be connected to I/O ports 8. It may be possible that controllers 2 of different power busses are in communication connection via the same communication bus 7. Communication bus 7 may connect the controllers 2 to a central controller 9. Communication bus 7 may be wired or wireless, as defined above.

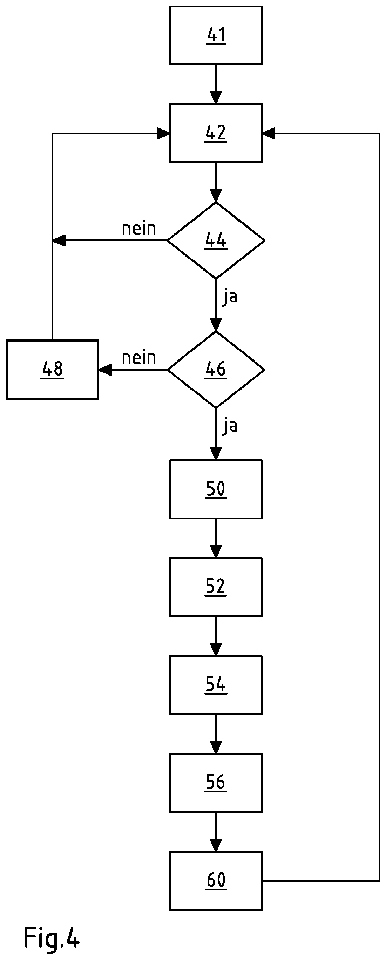

Fig. 4 depicts a flowchart of a method according to embodiments.

In a first step 40, parameters like the first threshold value A1 and the second threshold values A2 can be input into the processor 26. This can be done manually or from remote. The first and second threshold values A1, A2 can be set individually for a controller. The values may depend on the type of conveyor section or type of controller. For instance, mergers and diverters may have lower first threshold values, indicating later power limitation, then "usual" conveyor lines. The more relevant the conveyor is, the less reduction of power shall occur. That is, the determination of the nominal value may also depend on the type of the conveyor, the position of the conveyor or the like.

After the threshold values A1 and A2 have been set, in a further step 42, a voltage value V(t) is determined. This can be done by sensor 4a. The voltage value V(t) may be time variant. It may be possible to further calculate a derivative value as well as an integral value of the voltage value V(t).

In the next step 44, it is checked if the voltage value V(t) is equal or below the first threshold value A1. If not, the process cycles back to step 42.

In the affirmative, the process moves to step 46. In step 46 it is checked if the voltage value V(t) is equal or below the second threshold value A2. In the affirmative, the process moves to step 48. In step 48, the power provided to the motor is limited to zero, i.e. the motor is stopped. Then, the process cycles to step 42.

In case the voltage value V(t) is between the first threshold value A1 and the second threshold value A2, the process moves to step 50.

In step 50 the maximum difference value M is determined from a difference of A1 and A2. This can also be done in step 42.

In the following step 52, the current power value P(t) is obtained. The value P(t) is time variant.

In the following step 54, the time T is determined, being indicative of a time lapse since the voltage value V(t) has reached or dropped below the first threshold value A1 and the process has not cycled back to step 42.

Moreover, in step 54 or in step 42, the impedance value O(t) can be determined.

Thereafter, in step 56, a difference value D(t) is determined. The difference value D(t) is the difference between the first threshold value A1 and the voltage value V(t).

When the relevant values have been determined, the process moves to step 60. Relevant values are at least the threshold value A1 and A1 and the voltage value V(t).

Other relevant values can be the maximum difference value M, the power value P(t), the time T, the impedance value O(t) and the difference value D(t).

With the relevant values, a nominal value N(t) can be determined in step 60. The value N(t) can be determined from a combinations of functions with these values as arguments. These functions can be linear or non-linear. These functions can use derivates and/or integrals of the values. These functions can be combined by mathematical operations.

Once the nominal value has been determined, it can be applied to the current power, i.e. by changing the current power in step 60. The current power can be reduced depending on the nominal value.

After the power has been adjusted in step 60 depending on the nominal value N(t), the process cycles back to step 42, where a new voltage value V(t)is determined.

It should be noted that the use of a term in singular may be understood a comprising the plural and vice versa. It should be noted that the term "and" may be understood as "or" and vice versa. It should be noted that any enumeration shall be considered non-exhaustive. It should be noted that features and embodiments disclosed in the brief description and the detailed description can be combined with all and any feature thereof and/or the claims.

## Claims

1. Method for operating a motor-roller controller wherein
- a voltage value indicative of a voltage at an input power port of the motor-roller controller is determined by the motor-roller controller,
- a first threshold value for the voltage value is set in the motor-roller controller, **characterized in that**
- a nominal value for the output power at a motor-roller control port of the motor-roller controller is set depending on at least the voltage value and the first threshold value

2. Method according to claim 1,
**characterized in that**
- a second threshold value for the voltage value is set in the motor-roller controller and
- the nominal value is set further depending on the second threshold value.

3. Method according to claim 1 or 2,
**characterized in that**
- a power value indicative of a current output power at the motor-roller control port is determined by the motor-roller controller and
- the nominal value is set further depending on the power value.

4. Method according to one of the preceding claims,
**characterized in that**
- the nominal value is less than the current output power.

5. Method according to one of the preceding claims,
**characterized in that**
- a difference value between the voltage value and the first threshold value is calculated and the nominal value is set further depending on the difference value.

6. Method according to one of the preceding claims,
**characterized in that**
- an impedance value indicative of at least an ohmic resistance of the cables connecting the motor-roller controller to a power supply is determined and the nominal value is set further depending on the impedance value.

7. Method according to one of the preceding claims,
**characterized in that**
- a maximum difference value is calculated from a difference between the first threshold value and the second threshold value and the nominal value is set further depending on the maximum difference value.

8. Method according to one of the preceding claims,
**characterized in that**
- setting the nominal value comprises to start reducing the current output power when the voltage value drops below the first threshold value.

9. Method according to one of the preceding claims,
**characterized in that**
- setting the nominal value comprises to stop providing output power when the voltage drops below the second threshold value and/or the difference between the first threshold value and the voltage value is equal or greater than the maximum difference value.

10. Method according to one of the preceding claims,
**characterized in that**
- a time value indicative of a duration of reducing the current power is determined and the nominal value is set further depending on the time value.

11. Method according to one of the preceding claims,
**characterized in that**
- setting the nominal value comprises reducing the current output power with a linear or non-linear dependency on at least one of the voltage value and/or the difference value.

12. Method according to one of the preceding claims,
**characterized in that**
- setting the nominal value comprises reducing the current output power proportional to at least one of the voltage value and/or the difference value and/or depending on a gradient of the slope of at least one of the voltage value and/or the difference value and/or depending on an integral over the slope of least one of the voltage value and/or the difference value.

13. Method according to one of the preceding claims,
**characterized in that**
- the nominal value remains below the current output power determined at the time when the voltage value dropped below the first threshold value until setting the nominal value is stopped.

14. Motor-roller controller configured to operate according to a method of one of the preceding claims.

15. Conveyor system, for instance for conveying goods, packages and the like comprising at least two motor-roller controllers according to claim 14 and a power supply.
